# EUROPEAN PATENT APPLICATION

(11) **EP 3 524 852 A1**
(43) Date of publication of application: **14.08.2019**
(21) Application number: 19153589.7
(22) Date of filing: 24.01.2019
(51) Int. Cl.: F16H 15/28, F16H 13/14

(54) **BIDIRECTIONAL POWER TRANSFER MECHANISM FOR CONTINUOUSLY VARIABLE TRANSMISSION**

(30) Priority: 08.02.2018 TW 10704517
(71) Applicant: Motive Power Industry Co., Ltd., Dacun Township, Changhua County 515 (TW)
(72) Inventor: CHENG, Hsin-Lin, 515 Dacun Township, Changhua County (TW)
(74) Representative: Perani & Partners S.p.A.

(57) **Abstract**

A bidirectional power transfer mechanism for continuously variable transmission includes an outer rotor having first half capsule-shaped slots arranged annularly, each tapering off toward two ends thereof and being arcuate; an inner rotor with a side having a power delivery annular surface, the power delivery annular surface being adapted to come into contact with transmission balls of the continuously variable transmission, and an opposing side having second half capsule-shaped slots arranged annularly, each tapering off toward two ends thereof and being arcuate; a ring having rollers and a positioning ring, the positioning ring having positioning portions for positioning the rollers, the positioning ring being disposed between the outer and inner rotors, each said roller being disposed between a corresponding one of the first half capsule-shaped slots and a corresponding one of the second half capsule-shaped slots; and a resilient portion disposed between the outer rotor and the inner rotor.

## Description

### FIELD OF THE INVENTION

The present disclosure relates to a bidirectional power transfer mechanism for a continuously variable transmission and, more particularly, to a bidirectional power transfer mechanism for transferring power from the power input side of a continuously variable transmission to the power output side of the continuously variable transmission and from the power output side of the continuously variable transmission to the power input side of the continuously variable transmission.

### BACKGROUND OF THE INVENTION

Taiwan patent TWI610038 discloses a plurality of transmission balls operating in conjunction with a continuously variable transmission and a plurality of drive rods. Taiwan patent TWI571576 discloses a power transfer mechanism for a continuously variable transmission. However, the power transfer mechanism of TWI571576 essentially includes teardrop-shaped slots for transferring power, and thus TWI571576 can only transfer power from the power input side of a continuously variable transmission to the power output side of the continuously variable transmission, that is, unidirectionally.

Therefore, it is imperative to provide a bidirectional power transfer mechanism for a continuously variable transmission, which transfers power from the power input side of the continuously variable transmission to the power output side of the continuously variable transmission, and from the power output side of the continuously variable transmission to the power input side of the continuously variable transmission.

### SUMMARY OF THE INVENTION

In view of the aforesaid drawbacks of the prior art, it is an objective of the present disclosure to provide a bidirectional power transfer mechanism for a continuously variable transmission, so as to transfer power from the power input side of a continuously variable transmission to the power output side of the continuously variable transmission and from the power output side of the continuously variable transmission to the power input side of the continuously variable transmission.

The present disclosure provides a bidirectional power transfer mechanism for a continuously variable transmission, comprising: an outer rotor having a plurality of first half capsule-shaped slots, the first half capsule-shaped slots being arranged annularly, each said first half capsule-shaped slot tapering off toward two ends thereof and being arcuate; an inner rotor with a side having a power delivery annular surface, the power delivery annular surface being adapted to come into contact with a plurality of transmission balls of the continuously variable transmission, wherein an opposing side of the inner rotor has a plurality of second half capsule-shaped slots, the second half capsule-shaped slots being arranged annularly, each said second half capsule-shaped slot tapering off toward two ends thereof and being arcuate; a ring having a plurality of rollers and a positioning ring, the positioning ring having a plurality of positioning portions for positioning the rollers in place, respectively, the positioning ring being disposed between the outer rotor and the inner rotor, wherein each said roller is disposed between a corresponding one of the first half capsule-shaped slots and a corresponding one of the second half capsule-shaped slots; and a resilient portion disposed between the outer rotor and the inner rotor.

In an embodiment of the present disclosure, the resilient portion has a helical spring and a support ring, the outer rotor having a ring-shaped positioning slot, such that the ring-shaped positioning slot and the first half capsule-shaped slots are disposed on the same side of the outer rotor, the inner rotor being ring-shaped, wherein an inner annular surface of the inner rotor has a ring-shaped inward-protruding portion, the support ring being disposed on the ring-shaped inward-protruding portion, the helical spring having two end portions disposed at the ring-shaped positioning slot and the support ring, respectively.

In an embodiment of the present disclosure, the outer rotor has a power transfer axle and a support axle such that the power transfer axle and the support axle are disposed on two opposing sides of the outer rotor, respectively, wherein the support axle and the first half capsule-shaped slots are disposed on the same side of the outer rotor, with the support axle pivotally disposed at a seat of the continuously variable transmission.

Therefore, the bidirectional power transfer mechanism for a continuously variable transmission according to the present disclosure transfers power from the power input side of a continuously variable transmission to the power output side of the continuously variable transmission and from the power output side of the continuously variable transmission to the power input side of the continuously variable transmission.

### BRIEF DESCRIPTION OF THE DRAWINGS

FIG. 1 is an exploded view of a bidirectional power transfer mechanism for a continuously variable transmission according to a preferred embodiment of the present disclosure;
FIG. 2 is a perspective view of the bidirectional power transfer mechanism for a continuously variable transmission according to a preferred embodiment of the present disclosure;
FIG. 3 is a cross-sectional view based on FIG. 2; and
FIG. 4 is a schematic view of second half capsule-shaped slots of an inner rotor according to a preferred embodiment of the present disclosure.

### DETAILED DESCRIPTION OF THE PREFERRED EMBODIMENTS

Objectives, features, and advantages of the present disclosure are hereunder illustrated with specific embodiments, depicted with drawings, and described below.

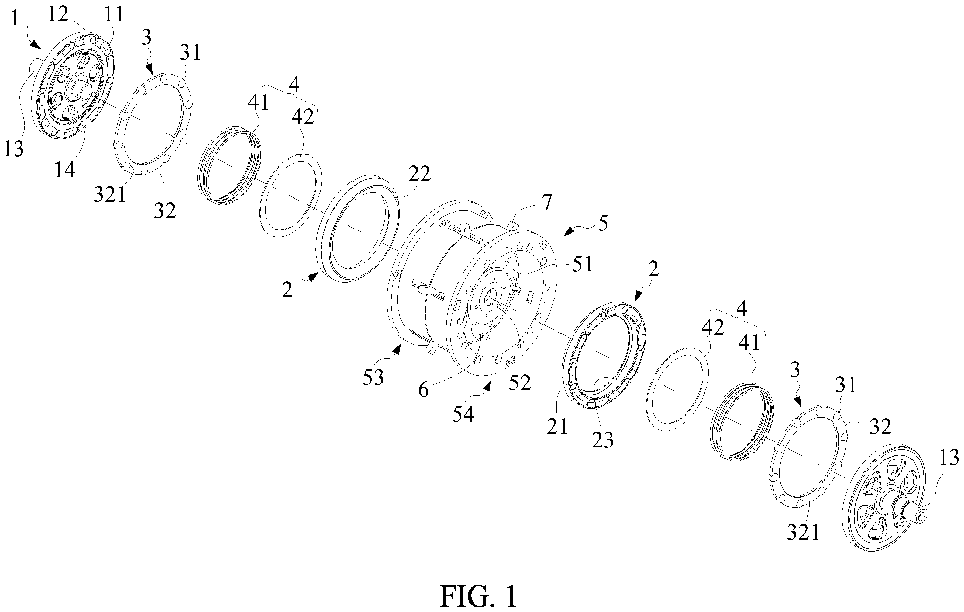

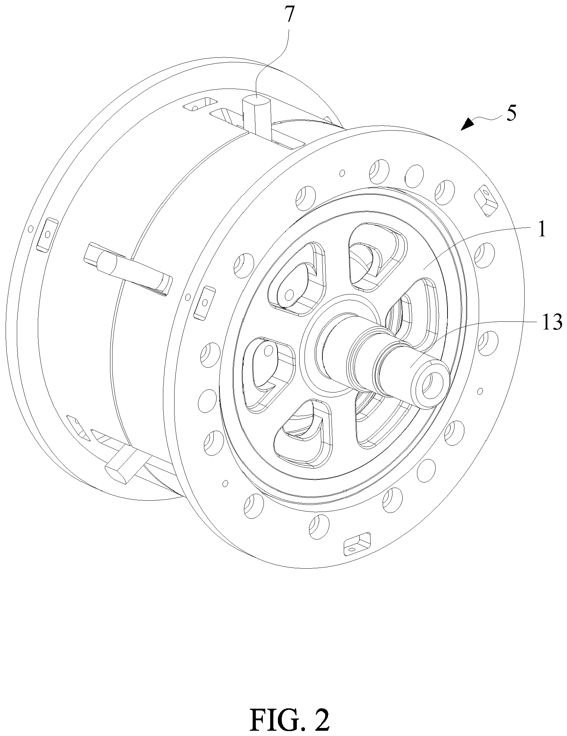

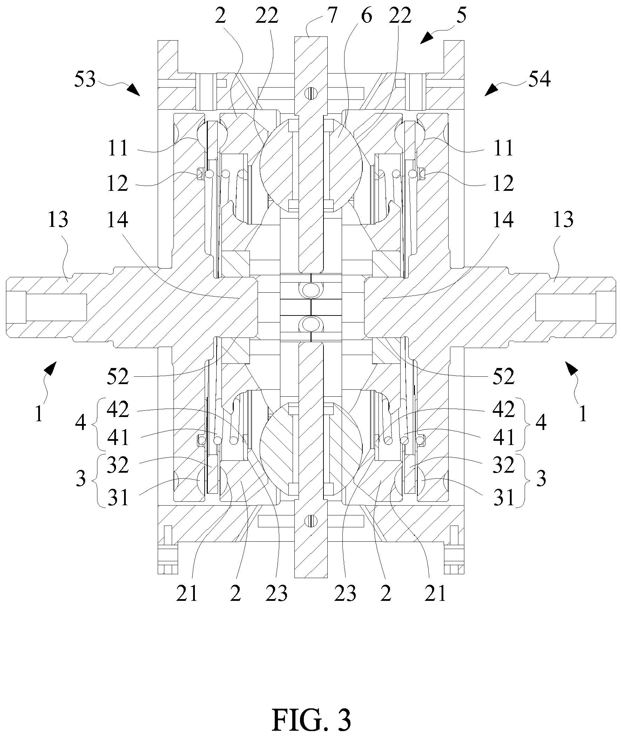

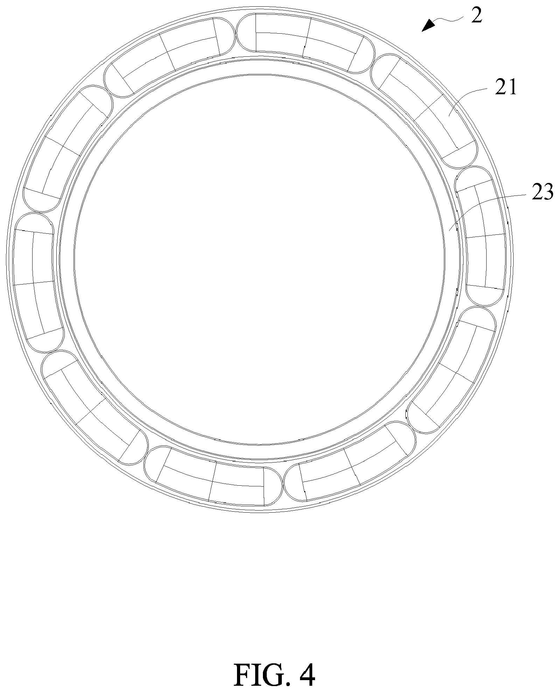

Referring to FIG. 1 through FIG. 4, the present disclosure provides a bidirectional power transfer mechanism for a continuously variable transmission, comprising an outer rotor 1, an inner rotor 2, a ring 3 and a resilient portion 4. Referring to FIG. 1, FIG. 3 and FIG. 4, the inner rotor 2 is ring-shaped. The inner side of the inner rotor 2 has a power delivery annular surface 22. The power delivery annular surface 22 tilts toward the center of the inner rotor 2. The power delivery annular surface 22 is adapted to come into contact with one side of each of a plurality of transmission balls 6 of the continuously variable transmission. The outer side of the inner rotor 2 has a plurality of second half capsule-shaped slots 21. The second half capsule-shaped slots 21 are arranged annularly. Each second half capsule-shaped slot 21 tapers off toward two ends thereof and is arcuate. Referring to FIG. 1 and FIG. 3, the inner side of the outer rotor 1 has a plurality of first half capsule-shaped slots 11. The first half capsule-shaped slots 11 are arranged annularly. Referring to FIG. 4, the first half capsule-shaped slots 11 have the same shape, whereas the second half capsule-shaped slots 21 have the same shaped. Each first half capsule-shaped slot 11 tapers off toward two end portions thereof and is arcuate. The first half capsule-shaped slots 11 face the second half capsule-shaped slots 21, respectively. Referring to FIG. 1 and FIG. 3, the outer rotor 1 is pivotally connected to a receiving hole 52 of a seat 5 of the continuously variable transmission. The transmission balls 6 are positioned in place at a plurality of positioning holes 51 of the seat 5, respectively. The transmission balls 6 are each pivotally connected to a drive rod 7. Referring to FIG. 1 and FIG. 3, the ring 4 has a plurality of rollers 31 and a positioning ring 32. The positioning ring 32 has a plurality of positioning portions 321 for positioning the rollers 31 in place, respectively. The positioning portions 321 are each a positioning slot (or a positioning hole). The ring 3 is disposed between the outer rotor 1 and the inner rotor 2. The rollers 31 are each disposed between a corresponding one of the first half capsule-shaped slots 11 and a corresponding one of the second half capsule-shaped slots 21. Referring to FIG. 1 and FIG. 3, the resilient portion 4 is abuttingly disposed between the outer rotor 1 and the inner rotor 2 such that the power delivery annular surface 22 of the inner rotor 2 is disposed on one side of each of the transmission balls 6.

Referring to FIG. 1 through FIG. 3, the bidirectional power transfer mechanism for a continuously variable transmission according to the present disclosure is applicable to a power input side 53 and a power output side 54 of the continuously variable transmission. The power input side 53 is connected to an engine of a gasoline car (a motor of an electric car). The power output side 54 is connected to a wheel of a gasoline car (or electric car). When the gasoline car opens the throttle (or opens the electric door of the electric car), power generated from the engine (or motor) is transferred from the power input side 53 of the continuously variable transmission to the power output side 54 of the continuously variable transmission to therefore drive the wheel to rotate; meanwhile, in the same coordinate system, each first half capsule-shaped slot 11 and a corresponding one of the second half capsule-shaped slots 21 facing the first half capsule-shaped slot 11 move relative to each other in opposite directions and thus separate such that the rollers 31 move from the centers of the first half capsule-shaped slots 11 and the centers of the second half capsule-shaped slots 21 toward the left sides (or right sides) of the first half capsule-shaped slots 11 and the right sides (or left sides) of the second half capsule-shaped slots 21, thereby causing the power delivery annular surface 22 of the inner rotor 2 to clamp the transmission balls 6. When the gasoline car (or electric car) shuts the throttle (or shuts the electric door) while moving on a level road or moving down a ramp, power generated from the wheel is transferred from the power output side 54 of the continuously variable transmission to the power input side 53 of the continuously variable transmission to therefore drive the engine (or motor); meanwhile, the rollers 31 move from the left sides (or right sides) of the first half capsule-shaped slots 11 and the right sides (or left sides) of the second half capsule-shaped slots 21 back to the centers of the first half capsule-shaped slots 11 and the centers of the second half capsule-shaped slots 21, and then move to the right sides (or left sides) of the first half capsule-shaped slot 11 and the left sides (or right sides) of the second half capsule-shaped slot 21, thereby causing the power delivery annular surfaces 22 of the inner rotors 2 to clamp the transmission balls 6. Therefore, the bidirectional power transfer mechanism for a continuously variable transmission according to the present disclosure not only transfers power from the power input side 53 of the continuously variable transmission to the power output side 54 of the continuously variable transmission, but also transfers the power from the power output side 54 of the continuously variable transmission to the power input side 53 of the continuously variable transmission, thereby causing the gasoline car to effectuate engine break by the engine or allowing the electric car to be recharged and effectuate auxiliary break by the motor.

Referring to FIG. 1 and FIG. 3, in an embodiment of the present disclosure, the resilient portion 4 is disposed inside the ring 3 and has a helical spring 41 and a support ring 42. The outer rotor 1 has a ring-shaped positioning slot 12. The ring-shaped positioning slot 12 and the first half capsule-shaped slots 11 are disposed on the same side of the outer rotor 1. The inner rotor 2 is ring-shaped. The inner annular surface of the inner rotor 2 has a ring-shaped inward-protruding portion 23. The support ring 42 is disposed on the ring-shaped inward-protruding portion 23. Two end portions of the helical spring 41 are disposed at the ring-shaped positioning slot 12 and the support ring 42, respectively, such that the helical spring 41 is firmly disposed between the outer rotor 1 and the inner rotor 2.

Referring to FIG. 1 and FIG. 3, in an embodiment of the present disclosure, the outer rotor 1 has a power transfer axle 13 and a support axle 14. The power transfer axle 13 and the support axle 14 are disposed on two opposing sides of the outer rotor 1, respectively. The support axle 14 and the first half capsule-shaped slots 11 are disposed on the same side of the outer rotor 1. The support axle 14 is pivotally disposed at the receiving hole 52 of the seat 5 of the continuously variable transmission such that the outer rotor 1 fits firmly to the seat 5 of the continuously variable transmission.

The present disclosure is disclosed above by preferred embodiments. However, persons skilled in the art should understand that the preferred embodiments are illustrative of the present disclosure only, but shall not be interpreted as restrictive of the scope of the present disclosure. Hence, all equivalent modifications and replacements made to the aforesaid embodiments shall fall within the scope of the present disclosure. Accordingly, the legal protection for the present disclosure shall be defined by the appended claims.

## Claims

1. A bidirectional power transfer mechanism for a continuously variable transmission, comprising:
an outer rotor (1) having a plurality of first half capsule-shaped slots (11), the first half capsule-shaped slots (11) being arranged annularly, each said first half capsule-shaped slot (11) tapering off toward two ends thereof and being arcuate;
an inner rotor (2) with a side having a power delivery annular surface (22), the power delivery annular surface (22) being adapted to come into contact with a plurality of transmission balls (6) of the continuously variable transmission, wherein an opposing side of the inner rotor (2) has a plurality of second half capsule-shaped slots (21), the second half capsule-shaped slots (21) being arranged annularly, each said second half capsule-shaped slot (21) tapering off toward two ends thereof and being arcuate;
a ring (3) having a plurality of rollers (31) and a positioning ring (32), the positioning ring (32) having a plurality of positioning portions (321) for positioning the rollers (31) in place, respectively, the positioning ring (32) being disposed between the outer rotor (1) and the inner rotor (2), wherein each said roller (31) is disposed between a corresponding one of the first half capsule-shaped slots (11) and a corresponding one of the second half capsule-shaped slots (21); and
a resilient portion (4) disposed between the outer rotor (1) and the inner rotor (2).

2. The bidirectional power transfer mechanism for a continuously variable transmission according to claim 1, wherein the resilient portion (4) has a helical spring (41) and a support ring (42), the outer rotor (1) having a ring-shaped positioning slot (12), such that the ring-shaped positioning slot (12) and the first half capsule-shaped slots (11) are disposed on a same side of the outer rotor (1), the inner rotor (2) being ring-shaped, wherein an inner annular surface of the inner rotor (2) has a ring-shaped inward-protruding portion (23), the support ring (42) being disposed on the ring-shaped inward-protruding portion (23), the helical spring (41) having two end portions disposed at the ring-shaped positioning slot (12) and the support ring (42), respectively.

3. The bidirectional power transfer mechanism for a continuously variable transmission according to claim 1, wherein the outer rotor (1) has a power transfer axle (13) and a support axle (14) such that the power transfer axle (13) and the support axle (14) are disposed on two opposing sides of the outer rotor (1), respectively, wherein the support axle (14) and the first half capsule-shaped slots (11) are disposed on a same side of the outer rotor (1), with the support axle (14) pivotally disposed at a seat (5) of the continuously variable transmission.
